# EUROPEAN PATENT APPLICATION

(11) **EP 4 654 546 A1**
(43) Date of publication of application: **26.11.2025**
(21) Application number: 25175253.1
(22) Date of filing: 09.05.2025
(51) Int. Cl.: H04L 41/147, H04L 41/5025, H04L 41/16, H04L 43/16

(54) **ADAPTIVE RATE LIMITING AND PREDICTIVE RETRY FOR MICROSERVICES**

(30) Priority: 24.05.2024 US 202418673704
(71) Applicant: eBay Inc., San Jose, CA 95125 (US)
(72) Inventor: WANG, Xiaoye, SAN JOSE, 95125 (US)
(74) Representative: Müller-Boré & Partner Patentanwälte PartG mbB

(57) **Abstract**

In accordance with the described techniques, a provider service receives a request log of a service endpoint including requests sent to the service endpoint by the provider service. The provider service extracts request log data from the request log including a failure count and an average response duration for the requests. The failure count includes the requests that have failed due to the provider service sending too many requests to the service endpoint and the requests that have failed due to server-side errors of the service endpoint. A throughput capacity for the service endpoint is predicted using a machine learning model based on the failure count and the average response duration. Then, the provider service adjusts a rate limiting threshold for the service endpoint based on the throughput capacity, and the rate limiting threshold defines a rate at which the provider service sends requests to the service endpoint.

## Description

### BACKGROUND

In general, microservices are an architectural approach to software design and development in which applications are built as a collection of loosely coupled, fine-grained services, such that each service runs its own software process and communicates with other services with lightweight communication mechanisms, such as hypertext transfer protocol (HTTP) or messaging protocols. Services in a microservices architecture expose application programming interfaces (APIs) that define endpoints and methods that other services can interact with, enabling the services to interact by accessing data, functionalities, or resources of other services. By breaking down an application into smaller, independent services, microservices architectures enable improved scalability and flexibility in software development and design due, in part, to different services being scalable independently of one another.

### SUMMARY

Adaptive rate limiting and predictive retry for microservices are described. In accordance with the described techniques, a provider service maintains a request log of a service endpoint including information regarding request/response exchanges between the provider service and the service endpoint. The provider service is configured to extract request log data from the request log including a failure count and an average response duration for the requests/response exchanges. Here, the failure count includes the requests in the request log that have failed due to the provider service sending too many requests to the service endpoint and the requests that have failed due to server-side errors of the service endpoint. Based on a throughput capacity predicted for the service endpoint using a machine learning model and based on the failure count and the response duration, the provider service adjusts a rate limiting threshold for the service endpoint. The rate limiting threshold defines a rate at which the provider service sends requests to the service endpoint.

The provider service applies the rate limiting threshold to the service endpoint, thereby delaying requests that exceed the rate limiting threshold to be sent to the service endpoint at a later time. In order to identify a retry time slot at which to retry sending the delayed requests, the provider service extracts time series data indicating throughput measurements exhibited by the service endpoint over a plurality of previous time units. Based on the time series data and using a time series forecasting model, the provider service forecasts a future time unit at which a total estimated throughput for the service endpoint is predicted to be less than or equal to the learned throughput capacity of the service endpoint. The total estimated throughput for the future time unit includes the requests that are predicted to be sent during the future time unit and the requests that are predicted to have been delayed up until the future time unit. In addition, the provider service sends one or more delayed requests at the forecasted future time unit.

This Summary introduces a selection of concepts in a simplified form that are further described below in the Detailed Description. As such, this Summary is not intended to identify essential features of the claimed subject matter, nor is it intended to be used as an aid in determining the scope of the claimed subject matter.

### BRIEF DESCRIPTION OF THE DRAWINGS

The detailed description is described with reference to the accompanying figures. Entities represented in the figures are indicative of one or more entities and thus reference is made interchangeably to single or plural forms of the entities in the discussion.
FIG. 1 is an illustration of a digital medium environment in an example implementation that is operable to employ techniques for adaptive rate limiting and predictive retry for microservices.
FIG. 2 depicts a system in an example implementation showing operation of a provider service to adjust a rate limiting threshold for a service endpoint.
FIG. 3 depicts a system in an example implementation showing operation of a provider service to predict a future time interval at which to reschedule requests that are delayed from being sent to a service endpoint.
FIG. 4 depicts a procedure in an example implementation of adaptive rate limiting for microservices.
FIG. 5 depicts a procedure in an example implementation of predictive retry for microservices.
FIG. 6 illustrates an example system including various components of an example device that can be implemented as any type of computing device as described and/or utilized with reference to FIGS. 1-5 to implement embodiments of the techniques described herein.

### DETAILED DESCRIPTION

### Overview

In various push-based microservices architectures, a single provider service is configured to actively send data or updates to many (e.g., tens of thousands of) service endpoints without the service endpoints explicitly requesting the data or updates. By way of example, the provider service sends requests (e.g., HTTP requests) to the many service endpoints including the data or updates, and the service endpoints communicate responses (e.g., HTTP responses) indicating whether the requests were successfully received and processed.

Rate limiting is a technique used to control data traffic to the service endpoints by applying a rate limiting threshold that limits the number of requests that the provider service sends to a service endpoint within a certain time frame, e.g., per second. Since the different service endpoints have different quality of service (QoS) levels, Service Level Agreements (SLAs), and hardware resources/computational capabilities, the throughput capacity (e.g., a maximum rate at which a service endpoint can receive and process requests from the provider service) is different for different service endpoints. Moreover, a particular service endpoint often experiences different traffic patterns at different times, and as such, the throughput capacity of the particular service endpoint varies with time. In other words, the optimal rate limiting threshold is different for different service endpoints, and the optimal rate limiting threshold of a particular service endpoint varies with time.

Conventional techniques for applying different time-varying rate limiting thresholds to different service endpoints, however, are overly sensitive to extraneous factors and/or noise signals other than service endpoint throughput capacity, such as resource contention, transient network jitter, and the like. Accordingly, conventional techniques apply rate limiting thresholds that do not accurately reflect a service endpoint's real-time throughput capacity, which decreases service endpoint performance, overloads the service endpoint, and often results in failure to meet QoS standards and SLAs of service endpoints.

Moreover, when rate limiting is applied, requests that exceed the rate limiting threshold are typically delayed and sent at a later time. Retry strategies are techniques and/or mechanisms for selecting a future time slot at which to retry sending delayed requests to a service endpoint. Conventional retry strategies, such as exponential backoff, select preconfigured future time slots at which to retry sending delayed requests to a service endpoint without considering the throughput capacity and/or predicted transient throughput (e.g., throughput of the service endpoint in a given time unit, such as a second) of the service endpoint at the preconfigured future time slots. As such, conventional retry strategies often choose retry time slots that are full. This further delays the requests, resulting in service endpoint overload, delayed recovery from transient failures, and/or failure to meet QoS standards and SLAs of service endpoints.

Accordingly, techniques are described herein for adaptive rate limiting and predictive retry for microservices which overcomes the drawbacks of conventional techniques. In accordance with the described techniques, a microservices architecture includes a provider service of a service provider system and a plurality of service endpoints implemented by client devices communicatively coupled, via a network. In one or more implementations, the provider service maintains a request log for a particular service endpoint, including information describing request/response exchanges between the provider service and the service endpoint. For example, the request log includes a request log entry for each request/response exchange between the provider service and the service endpoint, and each request log entry includes a timestamp, a response code (e.g., an HTTP response status code), and a response duration.

In accordance with the described techniques, the provider service aggregates a plurality of request log lines (e.g., representing a predefined number of most recent request/response exchanges) into a plurality of time unit summaries. For example, the provider service generates, for each respective time unit (e.g., one second time frame) represented in the plurality of request log lines, a time unit summary that includes the failure count for requests sent during a respective time unit, the average response duration for the requests sent during the respective time unit, and a throughput exhibited by the service endpoint during the respective time unit.

Here, the failure count of a time unit summary is the number of requests sent during a time unit that have failed due to the provider service sending too many requests to the service endpoint (e.g., having an HTTP 429 response status code) and the number of requests sent during the time unit that have failed due to server-side errors of the service endpoint, e.g., having an HTTP 5xx response status code. The average response duration of a time unit summary is an average time duration between when the provider service sends a request and when the provider service receives a corresponding response for the requests sent during a time unit. The throughput value of a time unit summary is the number of requests received and processed per second by the service endpoint (excluding failed requests) during a time unit.

In one or more implementations, the provider service generates filtered summaries of the request log data by further aggregating the time unit summaries, and by filtering and smoothing outliers and noisy data points in the time unit summaries. To do so, the provider service selects a time interval (e.g., which is a duration of time that is longer than a time unit) based on the throughput exhibited by the service endpoint. For example, the time unit is one second, and the provider service selects thirty seconds as the time interval because the average throughput exhibited by the service endpoint over thirty second intervals is consistent, e.g., within a threshold percentage of one another. Continuing with this example, each filtered summary includes the average throughput exhibited by the service endpoint over thirty time unit summaries aggregated into the filtered summary, a first quartile of the failure counts of the thirty time unit summaries aggregated into the filtered summary (e.g., a filtered failure count), and a first quartile of the average response durations of the thirty time unit summaries aggregated into the filtered summary, e.g., a filtered response duration. Notably, the first quartile of a dataset is a value in the dataset below which twenty-five percent of data points fall below.

Moreover, the provider service provides the filtered summaries to a regression model, and the regression model is trained to predict a transient throughput for the service endpoint based on input data including the failure count and an average response duration of the service endpoint in a time unit, e.g., in a one second time frame. To do so, the filtered failure count and the filtered response duration are fit into the regression model as predictor variables over a plurality of time intervals. Further, the average response duration is fit into the regression model as a response variable over the plurality of time intervals. Once the data of the filtered summaries is fit into the regression model, the regression model identifies a value of the transient throughput of the service endpoint that maps to a failure count below a first threshold value, and an average response duration below a second threshold value. The identified value of the transient throughput is output as the real-time throughput capacity for the service endpoint.

Based on the learned throughput capacity for the service endpoint, the provider service adjusts a rate limiting threshold for the service endpoint. For example, the provider service sets the rate limiting threshold for the service endpoint to be equal to the learned throughput capacity. This process is repeated iteratively for the service endpoint based on newly logged request/response exchanges maintained in the request log, resulting in a rate limiting threshold for the service endpoint that varies with time. This iterative process is also performed for a plurality of service endpoints, resulting in different time-varying rate limiting thresholds applied to different service endpoints.

Moreover, the provider service extracts time series data from the request log indicating throughput measurements for the service endpoint over a plurality of previous time units, e.g., previous one second time periods. The time series data is provided as input to a time series forecasting model, which outputs a throughput vector indicating predicted throughputs for the service endpoints over a plurality of future time units, e.g., future one second time periods.

Using the throughput vector, the provider service determines total estimated throughput values for each of the future time units, such that the total estimated throughput for a future time unit includes the requests that are predicted to be performed during the future time unit and the requests that are predicted to have been delayed up until the future time unit, e.g., a predicted backlog of delayed requests at the future time unit. Next, the provider service identifies a particular future time unit for which the total estimated throughput value is less than or equal to the real-time learned throughput capacity of the service endpoint. Further, the provider service schedules the delayed requests to be sent during the identified future time unit. Like the adaptive rate limiting process, this predictive retry process is repeated for the service endpoint (e.g., whenever a backlog or queue of delayed requests reaches a threshold number of requests), and is also performed for a plurality of service endpoints.

Accordingly, the described techniques apply different time-varying rate limiting thresholds to different service endpoints using a regression model having the aforementioned failure count and average response duration as predictor variables. By preprocessing the request log data and fitting the preprocessed data to the regression model in the described manner, the described techniques filter out and smooth outliers and noisy data points in the observed performance data, e.g., the failure count, average response duration, and throughput measurements. As a result, the described techniques apply rate limiting thresholds that more accurately reflect service endpoint throughput capacity, as compared to conventional techniques which make rate limiting decisions directly from raw performance data.

Moreover, in contrast to conventional techniques which retry delayed requests at predefined time slots, the described techniques retry delayed requests at a future time unit when a service endpoint is predicted to be experiencing low throughput. In particular, the described techniques schedule delayed request at a future time unit when the service endpoint can handle both the requests that are predicted to be performed/sent, and the requests that are predicted to have been delayed. For at least these reasons, the described techniques enable improved service endpoint performance, reduced instances of service endpoint overload, and meeting QoS standards and SLAs of service endpoints with increased frequency as compared to conventional techniques.

In the following discussion, an example environment is described that employs the techniques described herein. Example procedures are also described that are performable in the example environment as well as other environments. Consequently, performance of the example procedures is not limited to the example environment and the example environment is not limited to performance of the example procedures.

### Example Environment

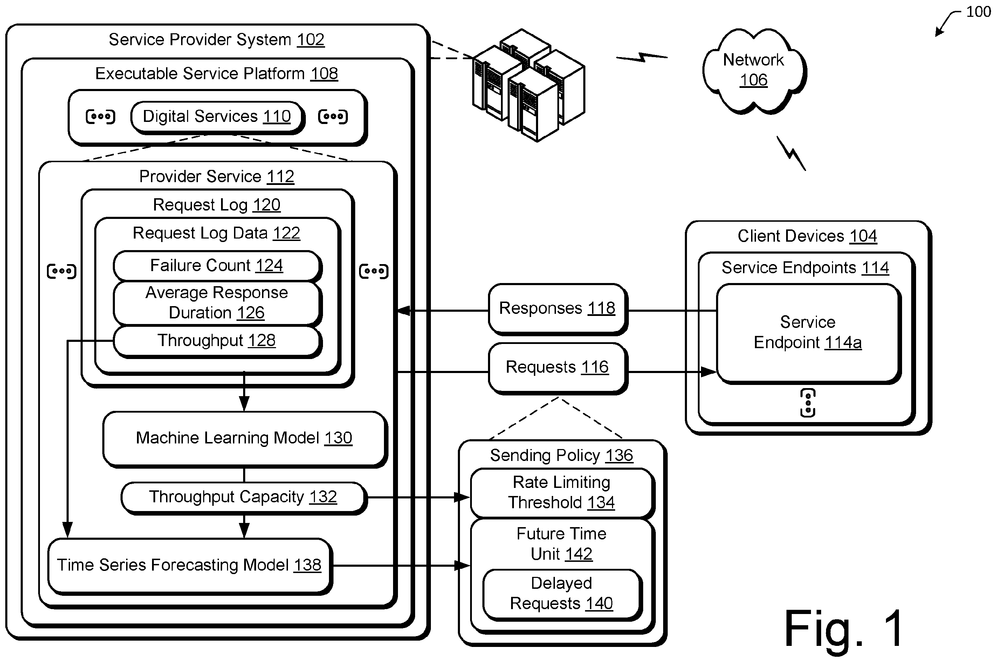

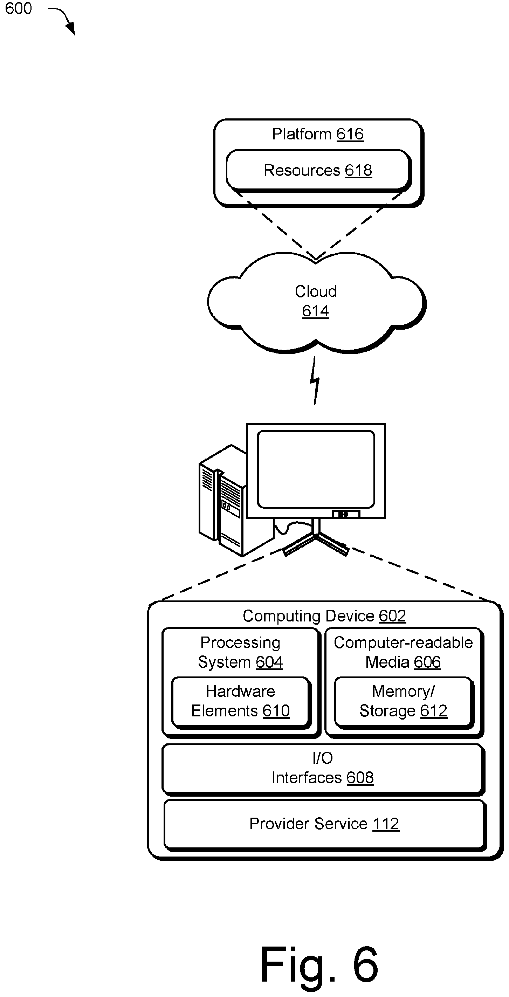

FIG. 1 is an illustration of a digital medium environment 100 in an example implementation that is operable to employ techniques for adaptive rate limiting and predictive retry for microservices. The illustrated environment 100 includes a service provider system 102 and a plurality of client devices 104 that are communicatively coupled, one to another, via a network 106. Computing devices that implement the service provider system 102 and the client devices 104 are implementable in a variety of ways. A computing device, for instance, is configurable as a desktop computer, a laptop computer, a mobile device (e.g., assuming a handheld configuration such as a tablet or mobile phone), and so forth. Thus, a computing device ranges from full resource devices with substantial memory and processor resources (e.g., personal computers, game consoles) to a low-resource device with limited memory and/or processing resources (e.g., mobile devices). Additionally, a computing device is also representative of a plurality of different devices, such as multiple servers utilized by a business to perform operations "over the cloud" as illustrated for the service provider system 102 and as further described with reference to FIG. 6.

The service provider system 102 includes an executable service platform 108. The executable service platform 108 is configured to implement and manage access to digital services **110** "in the cloud" that are accessible by the client devices 104 via the network 106. Thus, the executable service platform 108 provides an underlying infrastructure to manage execution of digital services 110, e.g., through control of underlying computational resources. The executable service platform 108 supports numerous computational and technical advantages, including an ability of the service provider system 102 to readily scale resources to address wants of an entity associated with the client devices 104. Thus, instead of incurring an expense of purchasing and maintaining proprietary computer equipment for performing certain computational tasks, cloud computing provides the client devices 104 with access to a wide range of hardware and software resources so long as the client has access to the network 106.

Digital services 110 can take a variety of forms. Examples of digital services include social media services, document management services, storage services, media streaming services, content creation services, productivity services, digital marketplace services, auction services, and so forth. In some instances, one or more of the digital services 110 are implemented, in whole or in part, by a provider service 112 of a microservices architecture.

In general, microservices are an architectural approach to software design and development in which applications are built as a collection of loosely coupled, fine-grained services, such that each service runs its own software process and communicates with other services with lightweight communication mechanisms, such as hypertext transfer protocol (HTTP) or messaging protocols. Services in a microservices architecture expose application programming interfaces (APIs) that define endpoints and methods that other services can interact with, enabling the services to interact by accessing data, functionalities, or resources of other services. Here, the environment 100 is representative of a microservices architecture including the provider service 112 and a plurality of service endpoints 114 which, in one or more implementations, correspond to third party applications running on third party server devices, e.g., the client devices 104.

In the context of techniques for adaptive rate limiting and predictive retry for microservices, the provider service 112 is a service in the microservices architecture that provides data, functionalities, and/or resources for consumption by the service endpoints 114. In contrast, the service endpoints 114 are services and/or API endpoints in the microservices architecture that are targeted by the provider service 112 as the intended recipient or consumer of the provided data, functionalities, or resources. For instance, the provider service 112 provides data, functionalities, and/or resources via communication of requests 116 (e.g., HTTP requests) to the service endpoints 114, while the service endpoints 114 communicate responses 118 (e.g., HTTP responses) to the provider service 112. A response 118 to a request 116 includes information about the status of the request 116, e.g., whether the request was successfully received and processed by a respective service endpoint 114. Although examples are described herein in the context of HTTP requests and responses, it is to be appreciated that the provider service 112 and the service endpoints 114 communicate via different messaging protocols, such as Advanced Message Queueing Protocol (AMQP), Remote Procedure Calls (gRPC), and Message Queueing Telemetry Transport (MQTT).

It should be noted that, in accordance with the described techniques, the service endpoints 114 are push-based service clients, as opposed to pull-based service clients. In a push-based model, the provider service 112 actively sends data or updates to the service endpoints 114 without the service endpoints explicitly requesting the data or updates, thereby "pushing" data to the service endpoints 114 when new data becomes available or when specific triggering events occur. This contrasts with a pull-based model, in which the service endpoints 114 would request the provider service 112 for data or updates, and the provider service 112 would respond with the requested data or updates.

In an illustrative and non-limiting example, the provider service 112 is a notification service of an e-commerce platform that provides notifications to third party applications (e.g., the service endpoints 114) that have subscribed to notifications regarding pricing information of items listed for sale on the e-commerce platform. By way of example, the provider service 112 is a data stream processing application that receives events from upstream data sources, processes (e.g., filters, aggregates, joins, enriches, analyzes) the events in real time, and pushes notifications (e.g., as HTTP requests) including the processed events to the service endpoints 114, e.g., the third party applications acting as downstream consumers of the events. It is to be appreciated that this example is illustrative and the described techniques for adaptive rate limiting and predictive retry are implementable by provider services 112 within a variety of service domains.

Rate limiting is a technique used to control data traffic to the service endpoints 114 by limiting the number of requests 116 that the provider service 112 can send to the service endpoints 114 within a certain time frame, e.g., per second. Rate limiting is crucial to protect the client devices 104 (e.g., third party server devices) from overloading, prevent misuse or abuse of computing resources of the service provider system 102 by the service endpoints 114, and ensure system stability for the service provider system 102. Notably, the term "rate limiting threshold" refers to a maximum rate at which the provider service 112 sends requests 116 to a service endpoint 114. In contrast, the term "throughput capacity" of a service endpoint 114 refers to a maximum rate at which the service endpoint 114 can sustainably receive and process requests 116 from the provider service 112 without being overloaded. Performance of the service endpoint 114 increases as the rate limiting threshold gets closer to the throughput capacity of the service endpoint 114.

Oftentimes, the provider service 112 provides functionalities or resources to many service endpoints 114, e.g., thousands, tens of thousands, or hundreds of thousands of service endpoints 114. Since the different service endpoints 114 have different quality of service (QoS) levels, Service Level Agreements (SLAs), and hardware resources/computational capabilities, the throughput capacity and/or optimal rate limiting threshold is different for different service endpoints 114. Similarly, a particular service endpoint 114 experiences different traffic patterns at different points in time, and as such, the particular service endpoint 114 has a real-time throughput capacity and/or optimal rate limiting threshold that varies with time.

Conventional techniques for applying different time-varying rate limiting thresholds to different service endpoints, however, are overly sensitive to extraneous factors and/or noise signals other than service endpoint throughput capacity, such as resource contention, transient network jitter, and the like. Therefore, conventional techniques often apply a rate limiting threshold to a service endpoint that does not accurately reflect the real-time throughput capacity of the service endpoint, resulting in less than optimal performance of service endpoints, overloading of the service endpoints, and/or failure to meet QoS standards and SLAs of the service endpoints.

When rate limiting is applied, requests 116 are often delayed from being sent by the provider service 112. In an example, a rate limiting threshold of five hundred requests per second is applied to a service endpoint 114, and the provider service 112 has seven hundred requests 116 to send to the service endpoint 114 in a given second. In this example, the provider service 112 sends five hundred requests to the service endpoint 114 in the given second, and delays the remaining two hundred requests 116 for sending at a later time.

Retry strategies are techniques and/or mechanisms for selecting a future time slot at which to retry sending delayed requests 116 to a service endpoint 114. Conventional retry strategies, such as exponential backoff, select preconfigured future time slots at which to retry sending delayed requests to a service endpoint 114 without considering throughput capacity and/or estimated transient throughput of the service endpoint 114 at the preconfigured future time slots. Notably, the term "transient throughput" of a service endpoint refers to a number of requests processed by the service endpoint in a given time unit (e.g., in a second), and excludes failed requests. For at least these reasons, conventional retry strategies often lead to service endpoint overload, delayed recovery from transient failures, and/or failure to meet QoS standards and SLAs of the service endpoints.

Accordingly, techniques for adaptive rate limiting and predictive retry for microservices are described that overcome the limitations of conventional techniques. In accordance with the described techniques, the provider service 112 sends requests 116 to a service endpoint 114a, and the service endpoint 114a sends responses 118 back to the provider service 112. Furthermore, the provider service 112 maintains a request log 120 for the service endpoint 114a, and records information associated with request/response exchanges in the request log 120. Examples of the information recorded in the request log 120 includes timestamps of request/response exchanges, response durations of request/response exchanges, and response status codes of request/response exchanges.

In one or more implementations, the provider service 112 extracts request log data 122 from the request log 120. As shown, the request log data 122 includes a failure count 124, an average response duration 126, and a throughput 128 exhibited by the service endpoint 114a. In accordance with the described techniques, the request log data 122 is aggregated on a per time unit basis, e.g., per second, per minute, every ten minutes, per hour, etc. For example, the provider service 112 determines, for each one of a plurality of time units, the failure count 124, the average response duration 126, and the throughput 128 exhibited by the service endpoint 114a during a respective time unit.

The failure count 124 for a respective time unit refers to a number of requests 116 sent during the respective time unit that have failed due to the provider service 112 sending too many requests (e.g., request/response exchanges having an HTTP 429 response status code), and due to the server-side errors of the service endpoint 114a, e.g., request/response exchanges having an HTTP 5xx response status code. Further, the average response duration 126 for a respective time unit refers to an average duration between when the provider service 112 sends a request 116 and when the provider service 112 receives a corresponding response 118 for requests 116 sent during the respective time unit. Moreover, the throughput 128 (e.g., the transient throughput) exhibited by the service endpoint 114a during a respective time unit is the number of requests 116 that were successfully received and processed per second by the service endpoint 114a during the respective time unit.

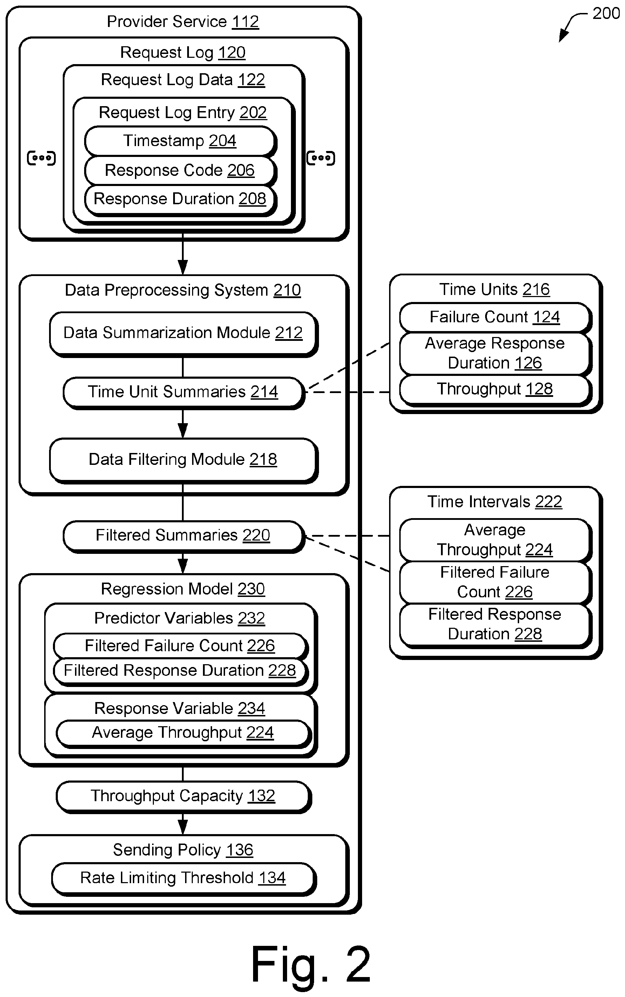

As shown, the request log data 122 is provided, as input, to a machine learning model 130. In this way, the request log data 122 is used as training data to train the machine learning model 130 to determine a real-time throughput capacity 132 for the service endpoint 114a. As further discussed below with reference to FIG. 2, further aggregating, preprocessing, and/or filtering operations are performed on the request log data 122 before being provided to the regression model in one or more examples.

As used herein, the term "machine learning model" refers to a computer representation that is tunable (e.g., trainable) based on inputs to approximate unknown functions. By way of example, the term "machine learning model" includes a model that utilizes algorithms to learn from, and make predictions on, known data by analyzing the known data to learn to generate outputs that reflect patterns and attributes of the known data. According to various implementations, such a machine learning model uses supervised learning, semi-supervised learning, unsupervised learning, reinforcement learning, and/or transfer learning. For example, a machine learning model is capable of including, but is not limited to, clustering, decision trees, support vector machines, linear regression, logistic regression, non-linear regression, Bayesian networks, random forest learning, dimensionality reduction algorithms, boosting algorithms, artificial neural networks (e.g., fully-connected neural networks, deep convolutional neural networks, or recurrent neural networks), deep learning, etc. By way of example, a machine learning model makes high-level abstractions in data by generating data-driven predictions or decisions from the known input data.

As further discussed below with reference to FIG. 2, the machine learning model 130 is a regression model in one or more examples. In these implementations, the regression model is trained to predict a transient throughput for the service endpoint 114a based on the request log data 122. To do so, the failure count 124 and the average response duration 126 (after having been further aggregated, preprocessed, and/or filtered) are fit to the regression model as predictor variables over a plurality of time intervals. In addition, the throughput 128 (after having been further aggregated, preprocessed, and/or filtered) is fit to the regression model as a response variable over the plurality of time intervals. Next, the provider service 112 uses the regression model to determine a value of the transient throughput that maps to the failure count 124 below a first threshold, and the average response duration 126 below a second threshold. The determined value of the transient throughput is the throughput capacity 132 for the service endpoint 114a.

Based on the learned throughput capacity 132 for the service endpoint 114a, the provider service 112 controls operation of the service endpoint 114a by adjusting a rate limiting threshold 134 applied to the service endpoint 114a. Here, the rate limiting threshold 134 controls the number of requests that the provider service 112 sends to the service endpoint 114a per time unit, e.g., per second. Here, the rate limiting threshold 134 is illustrated as part of a sending policy 136 of the service endpoint 114a controlling how frequently the provider service 112 sends requests 116 to the service endpoint 114a and when requests 116 that are delayed based on the rate limiting threshold 134 are to be sent to the service endpoint 114a. In one or more implementations, the rate limiting threshold 134 is set to be equal to the learned throughput capacity 132.

Furthermore, time series data is provided to a time series forecasting model 138, and the time series data indicates throughput 128 measurements (e.g., as extracted from the request log 120) over a plurality of previous time units. Broadly, a time series forecasting model is a statistical or machine learning model designed to analyze past observations of a time-dependent variable and predict future values of the time-dependent variable based on patterns, trends, and relationships identified in historical data. In accordance with the described techniques, the time-dependent variable is transient throughput of the service endpoint 114a, and the historical data is time series data indicating previous throughput 128 measurements for the service endpoint 114a over a plurality of previous time units.

As mentioned above, applying the rate limiting threshold 134 to the service endpoint 114a results in delaying requests 116 that are to be sent at a later time unit based on the rate limiting threshold 134. These are referred to as delayed requests 140. In general, the time series forecasting model 138 is configured to determine predicted throughputs for the service endpoint 114a over a plurality of future time units. Further, the provider service 112 is configured to determine a future time unit 142 at which a total estimated throughput for the service endpoint 114a is predicted to be less than or equal the learned throughput capacity 132. Notably, the total estimated throughput at a future time unit 142 is a summation of the predicted throughput at the future time unit 142 and the number of delayed requests 140 that are expected to be accumulated up until the future time unit 142. In this way, the provider service 112 sends the delayed requests 140 at the determined future time unit 142 during which the service endpoint 114a is expected to be experiencing low throughput, and as such, the service endpoint 114a can handle both the requests 116 predicted to be sent during the time slot and the delayed requests 140

It should be noted that the above described process is continually repeated for the service endpoint 114a, e.g., at defined time periods. For example, the provider service 112 continually updates the request log 120 to include new requests 116 sent to the service endpoint 114a. At defined time periods, the provider service 112 extracts the request log data 122 including the failure count 124, the average response duration 126, the throughput 128 measurements aggregated over the plurality of time units. In one or more implementations, the extracted request log data 122 covers a predetermined number of most recent requests 116, and as such, includes request log data 122 of previously processed requests 116 (e.g., of previous time periods) as well as the new requests 116. Furthermore, the machine learning model 130 determines the throughput capacity 132 based on the extracted request log data 122 at the defined time periods, and continually adjusts the rate limiting threshold 134 applied to the service endpoint 114a at the defined time periods.

Additionally, the provider service 112 continually schedules the delayed requests 140 for the future time unit 142 using time series forecasting. By way of example, the provider service 112 runs the time series forecasting model 138 on time series data of the throughput 128 measurements covering a predetermined number of previous time units either when the number of delayed requests 140 (e.g., present in a cache or backlog of delayed requests) exceeds a threshold number, or at predefined time periods. In one or more examples, the predefined time periods at which the time series forecasting model 138 is ran is different (e.g., more frequent or less frequent) than the predefined time periods at which the real-time throughput capacity 132 is determined for the service endpoint 114a. As a result, the provider service 112 continually schedules delayed requests 140 for future time units 142 at which the predicted throughput of the service endpoint 114a is expected to be low enough to process requests 116 of the predicted throughput and the delayed requests 140.

Although examples for adaptive rate limiting and predictive retry for microservices are discussed in the context of a singular service endpoint 114a, it is to be appreciated that the provider service 112 performs similar operations for a plurality of service endpoints 114, e.g., thousands, tens of thousands, or hundreds of thousands of service endpoints 114. In other words, the provider service 112 determines real-time throughput capacities 132 for a multitude of service endpoints 114, resulting in different time-varying rate limiting thresholds 134 applied to different service endpoints 114. Further, the provider service 112 predictively schedules delayed requests 140 for the multitude of service endpoints 114 using time series forecasting based on time series throughput 128 measurements and the real-time throughput capacity 132 of respective service endpoints 114.

Notably, the described techniques determine time-varying, endpoint-specific rate limiting thresholds 134 based on the failure count 124 (e.g., request/response exchanges having HTTP 429 response status codes and HTTP 5xx response status codes) and average response duration 126 of respective service endpoints 114. These variables have demonstrated a strong correlation with transient throughput and throughput overcapacity of service endpoints 114 in experimental analysis, e.g., as measured by Pearson's correlation coefficient and Spearman's rank correlation coefficient. Furthermore, the described techniques fit the aforementioned signals into a regression model, and use the regression model to determine the throughput capacity 132 and the rate limiting threshold 134. This contrasts with conventional techniques which make rate limiting decisions directly from raw performance data of a service endpoint 114. By leveraging the regression model for adaptive rate limiting, the described techniques are less prone to overemphasizing outliers in performance data (e.g., the failure count 124 and the average response duration 126) of a service endpoint 114. As a result, the described techniques apply rate limiting thresholds to service endpoints 114 that more accurately reflect the real-time throughput capacity of the service endpoints 114 than conventional techniques, resulting in better performance of the service endpoints 114, fewer instances of overloading the service endpoints 114, and meeting QoS standards and SLAs with increased frequency.

Additionally, in contrast to conventional techniques which utilize preconfigured retry time slots, the provider service 112 sends the delayed requests 140 at a time slot during which the service endpoint 114a is expected to experience a low enough throughput to handle both the requests 116 predicted to be sent during the time slot and the delayed requests 140. As a result, the described techniques lead to fewer instances of service endpoint overload, faster recovery from transient failures, and meeting QoS standards and SLAs with increased frequency, as compared to conventional techniques.

In general, functionality, features, and concepts described in relation to the examples above and below are employed in the context of the example procedures described in this section. Further, functionality, features, and concepts described in relation to different figures and examples in this document are interchangeable among one another and are not limited to implementation in the context of a particular figure or procedure. Moreover, blocks associated with different representative procedures and corresponding figures herein are applicable together and/or combinable in different ways. Thus, individual functionality, features, and concepts described in relation to different example environments, devices, components, figures, and procedures herein are usable in any suitable combinations and are not limited to the particular combinations represented by the enumerated examples in this description.

### Adaptive Rate Limiting and Predictive Retry Features

FIG. 2 depicts a system 200 in an example implementation showing operation of a provider service to adjust a rate limiting threshold for a service endpoint. As shown, the provider service 112 maintains a request log 120 of a service endpoint 114a including information regarding requests 116 sent by the provider service 112 to the service endpoint 114a. By way of example, the provider service 112 maintains a request log 120 including a request log entry 202 for each request/response exchange between the provider service 112 and the service endpoint 114a. As shown, each request log entry 202 includes a timestamp 204, a response code 206, and a response duration 208. In one or more implementations, the request log 120 is immutable, e.g., the request log entries 202 cannot be modified after the timestamp 204, the response code 206, and the response duration 208 is recorded in the request log 120. Example formats of the request log 120 include textual logs, message queues, and database tables.

The timestamp 204 of a request/response exchange is a time (e.g., year, month, day, and time of day) at which the request is sent to the service endpoint 114a, e.g., as opposed to a time when the request is persisted in the request log 120. Additionally, the response duration 208 of a request/response exchange refers to a duration of time from when the provider service 112 sends the request 116 to when the provider service 112 receives the corresponding response 118 from the service endpoint 114a.

In one or more implementations, the response code 206 is an HTTP response status code. Example HTTP response status codes include HTTP 1xx status codes indicating informational responses 118, HTTP 2xx response status codes indicating that the request was successfully received and processed by the service endpoint 114a, HTTP 3xx response status codes (e.g., redirection responses 118) indicating that further action must be taken by the service endpoint 114a to complete the request 116, HTTP 4xx response status codes indicating that the client device 104 cannot fulfill the request 116 due to an error in the request 116 sent by the provider service 112, and HTTP 5xx response status codes indicating a server of the service endpoint 114a encountered an error while processing the request. In particular, an HTTP 429 response status code indicates that the service endpoint 114a cannot process a request 116 because the provider service 112 is sending requests 116 at a rate higher than the service endpoint 114a can handle. Notably, an HTTP Nxx response status code is indicative of any HTTP response status code that begins with 'N.'

As shown, the request log data 122 is provided to a data preprocessing system 210. More specifically, a predefined number of most recent request log entries 202 (e.g., the ten thousand most recent request log entries 202) are provided to the data preprocessing system 210. Broadly, the data preprocessing system 210 is representative of functionality for removing and/or smoothing outliers and noisy data points from the request log data 122. As part of this, the predefined number of request log entries 202 are provided to a data summarization module 212 configured to aggregate the predefined number of request log entries 202 into time unit summaries 214 for a plurality of time units 216, e.g., one second time frames.

For example, the data summarization module 212 generates, for each respective time unit 216, a time unit summary 214 that includes the failure count 124 for requests 116 sent during a respective time unit 216, the average response duration 126 for the requests 116 sent during the respective time unit 216, and a throughput 128 exhibited by the service endpoint 114a during the respective time unit 216. The failure count 124 of a time unit summary 214 is the number of requests 116 sent during a respective time unit 216 (e.g., as identified based on the timestamps 204) having a response code 206 indicating too many requests sent to the service endpoint 114a (e.g., HTTP response status code 429) or a response code 206 indicating server-side errors of the service endpoint 114a, e.g., HTTP response status code 5xx. The average response duration 126 for a time unit summary 214 is the average duration of time between when the provider service 112 sends a request 116 and when the provider service 112 receives a corresponding response 118 from the service endpoint 114a for requests 116 sent during a respective time unit 216, e.g., as identified by the timestamps 204. Furthermore, the throughput 128 of a time unit summary 214 is the number of requests 116 sent per second during a respective time unit 216 (e.g., as identified by the timestamps 204), or the total number of requests 116 sent during the respective time unit 216 in examples in which the time unit 216 is one second.

The time unit summaries 214 are provided to a data filtering module 218, which is representative of functionality for generating filtered summaries 220 by further aggregating the time unit summaries 214, and filtering, removing, and/or smoothing outliers and noisy data points in the time unit summaries 214. As part of this, the data filtering module 218 selects a time interval 222 at which to further aggregate the time unit summaries 214. In accordance with the described techniques, a time interval 222 is a longer duration of time than a time unit 216, e.g., the time unit 216 is one second while the time interval 222 is thirty seconds. The data filtering module 218 selects the time interval 222 based on the throughput 128 values of the time unit summaries 214. For example, the data filtering module 218 selects thirty seconds as the time interval 222 because average throughput 224 values exhibited by the service endpoint 114a over a plurality of thirty second time intervals 222 is relatively consistent, e.g., the average throughput 224 values for the plurality of time intervals 222 are within a threshold percentage of one another. By doing so, the data filtering module 218 smooths out singular time units 216 exhibiting unusually high throughput 128 values or unusually low throughput 128 values, e.g., outliers.

Once the time interval 222 is selected, the data filtering module 218 determines, for each respective time interval 222, the average throughput 224, a filtered failure count 226, and a filtered response duration 228. To determine the filtered failure count 226 for a filtered summary 220, the data filtering module 218 extracts a first quartile of the failure count 124 of the time unit summaries 214 aggregated into the filtered summary 220. To determine the filtered response duration 228 for a filtered summary 220, the data filtering module 218 takes a first quartile of the average response duration 126 of the time unit summaries 214 aggregated into the filtered summary 220. Notably, the first quartile is a value below which twenty-five percent of data points in a dataset fall. To determine the average throughput 224 of a filtered summary 220, the data filtering module 218 takes an average of the throughput 128 across the time unit summaries 214 aggregated into the filtered summary 220.

Consider an example in which the time unit 216 is one second and the time interval 222 is one minute or sixty seconds, e.g., there are sixty time unit summaries 214 aggregated into a filtered summary 220. In this example, the filtered failure count 226 of a filtered summary 220 is a particular value of the failure count 124 for one of the time unit summaries 214. In addition, fifteen other values of the failure count 124 (e.g., twenty-five percent of failure count 124 values) of different time unit summaries 214 (that are also aggregated into the filtered summary 220) fall below the particular value. Similarly, the filtered response duration 228 of a filtered summary 220 is a particular value of the average response duration 126 for one of the time unit summaries 214. Moreover, fifteen other values of the average response duration 126 (e.g., twenty-five percent of average response duration 126 values) for different time unit summaries 214 (that are also aggregated into the filtered summary 220) fall below the particular value. Finally, the average throughput 224 of a filtered summary 220 is the average of the throughput 128 values across the sixty time unit summaries 214 aggregated into the filtered summary 220.

As shown, the provider service 112 provides the filtered summaries 220 to a regression model 230 (e.g., the machine learning model 130 of FIG. 1), which is configured to determine a throughput capacity 132 for the service endpoint 114a. Although depicted as part of the provider service 112, it is to be appreciated that the regression model 230 is implemented by one or more server devices that are external to the service provider system 102 in one or more implementations. For example, the regression model 230 is a web service that the provider service 112 accesses via API calls, passing along the filtered summaries 220 as input data. Further, the regression model 230 receives API responses from the regression model 230, receiving the throughput capacity 132 in response to the API call. By way of example, the regression model 230 sinks the throughput capacity 132 into a key value store of the service provider system 102, which is readable by the provider service 112 to obtain the throughput capacity 132 for the service endpoint 114a.

Any one or more of a variety of public or proprietary regression models are implementable by the provider service 112, including both linear and non-linear regression models. Examples of the regression model 230 include, but are not limited to, multivariate linear regression models, Lasso regression models, Ridge regression models, quantile regression models, random forest regression models, extreme gradient boosting (XGboost) regression models, support vector regression models, and Gaussian process regression models.

As shown, the filtered failure count 226 and the filtered response duration 228 are fit into the regression model 230 as predictor variables 232 over the plurality of time intervals 222. Further, the average throughput 224 is fit into the regression model 230 as a response variable 234 over the plurality of time intervals 222. As a result, the regression model 230 learns to predict a transient value of the response variable 234 (e.g., transient throughput of the service endpoint 114a) based on transient values of the predictor variables 232, e.g., the failure count 124 and the average response duration 126. In an example in which the time unit 216 is one second, the regression model 230 receives input data including a failure count 124 of the service endpoint 114a during a one second time frame and an average response duration 126 exhibited by the service endpoint 114a during a one second time frame, and outputs a transient throughput value expected to be exhibited by the service endpoint 114a during the one second time frame based on the input data. Any one or more of a variety of public or proprietary techniques are leveraged to tune hyperparameters of the regression model 230, including but not limited to Randomized Search and k-fold cross-validation.

Once the filtered summaries 220 are fit into the regression model 230, the provider service 112 is configured to employ the regression model 230 to determine a throughput capacity 132 for the service endpoint 114a. To do so, an input filter condition specifying a threshold value of the failure count 124 and a threshold value of the average response duration 126 is fed to the regression model 230. In one or more implementations, the threshold value of the failure count 124 is specified as a failure ratio. For example, the failure ratio is a ratio in which the predictor variable 232, failure count 124, is the numerator, and the response variable, transient throughput is the denominator. For example, the failure ratio is determined by identifying, using the trained regression model 230, a transient throughput value that maps to a value of the failure count 124, and incorporating the value of the failure count 124 into a ratio as the numerator and incorporating the transient throughput value into the ratio as the denominator.

Accordingly, the regression model 230 receives the input filter condition specifying the threshold value of the failure count 124 (e.g., the failure ratio) and the threshold value of the average response duration 126, and the regression model 230 determines a value of the transient throughput that satisfies the input filter condition. For example, the determined value of the transient throughput maps to a failure count 124 that falls below the threshold value of the failure count 124 (e.g., the failure ratio), and an average response duration 126 that falls below the threshold value of the average response duration 126. Here, the determined value of the transient throughput that satisfies the input filter condition is the real-time throughput capacity 132 for the service endpoint 114a.

As shown, the provider service 112 adjusts a rate limiting threshold 134 based on the throughput capacity 132, e.g., a maximum rate at which the provider service 112 sends requests 116 to the service endpoint 114a. By way of example, the provider service 112 sets the rate limiting threshold 134 of the service endpoint 114a to be equal to the learned throughput capacity 132. Thus, in an example in which the throughput capacity 132 and the rate limiting threshold 134 is five hundred requests 116 per second, the provider service 112 sends requests 116 to the service endpoint 114a at a maximum rate of five hundred requests 116 per second. Requests 116 that exceed the maximum rate are delayed for sending at a later time.

As previously mentioned, the above-described process is repeated (e.g., at defined time periods, such as every ten seconds) on the request log data 122 of new request/response exchanges between the provider service 112 and the service endpoint 114a. As a result, the regression model 230 is iteratively updated based on changing traffic patterns of the service endpoint 114a, and as such, the provider service 112 continually adjusts the rate limiting threshold 134 applicable to the service endpoint 114a. In addition, the provider service concurrently performs the above-described process on the request log data 122 of request logs 120 maintained for a plurality of service endpoints 114, resulting in different rate limiting thresholds 134 applied to different service endpoints 114.

It should be noted that a service endpoint's observed transient throughput 128 can vary greatly between different time units 216. For example, an unusually high throughput may be observed for a service endpoint 114 over a short duration of time. However, just because the service endpoint 114 can successfully handle the unusually high for a short duration of time does not mean that the service endpoint 114 can handle the unusually high throughput over a prolonged period of time. Since conventional techniques make rate limiting decisions directly from raw observed data, conventional techniques apply rate limiting thresholds to service endpoints 114 that are overly sensitive to outliers and noisy data points. It is for this reason that the described techniques perform the aforementioned data preprocessing steps and fit the preprocessed data into a regression model 230. By doing so, the described techniques filter out and/or smooth outliers and noisy data points to a greater extent than conventional techniques, leading to application of rate limiting thresholds 134 that more accurately reflect a service endpoint's true throughput capacity.

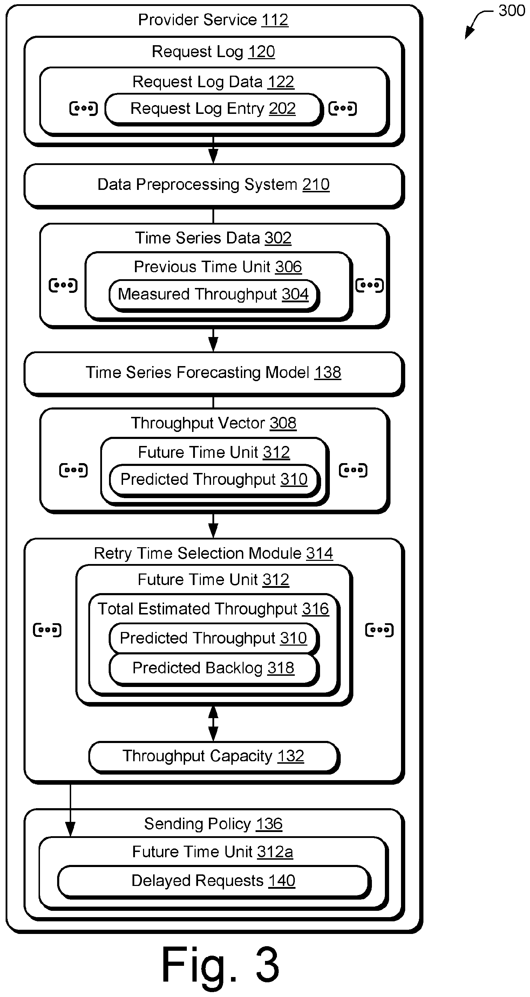

FIG. 3 depicts a system 300 in an example implementation showing operation of a provider service to predict a future time interval at which to reschedule requests that are delayed from being sent to a service endpoint. Here, the provider service 112 maintains the request log 120 of the service endpoint 114a including information regarding requests 116 sent by the provider service 112 to the service endpoint 114a. For example, the request log 120 includes a request log entry 202 for each request/response exchange between the provider service 112 and the service endpoint 114a. As further discussed above with reference to FIG. 2, each request log entry 202 includes a timestamp 204, a response code 206, and a response duration 208.

The request log data 122 is provided to the data preprocessing system 210, which is configured to output time series data 302 indicating measured throughput 304 values for the service endpoint 114a over a plurality of previous time units 306. By way of example, the time series data 302 corresponds to the throughput 128 values determined by the data summarization module 212 for a predefined number of most recent time units 216, as further discussed above with reference to FIG. 2. In other words, the previous time units 306 are a predefined number of most recent time units, e.g., one second time frames. Further, the measured throughput 304 of a previous time unit 306 is the observed transient throughput of the service endpoint 114a during the previous time unit 306, e.g., the number of requests 116 received and processed by the service endpoint 114a in a one second time frame.

The data preprocessing system 210 provides the time series data 302 to the time series forecasting model 138, which is configured to generate a throughput vector 308 based on the time series data 302 indicating predicted throughputs 310 for the service endpoint 114a during a plurality of future time units 312. By way of example, the throughput vector 308 indicates a first predicted throughput 310 of three hundred requests 116 predicted to be received and processed by the service endpoint 114a during a first future time unit 312 (e.g., a first future one second time frame), a second predicted throughput of four hundred fifty requests 116 predicted to be received and processed by the service endpoint 114a during a second future time unit 312 (e.g., a second, subsequent one second time frame), and so on.

Any one or more of a variety of public or proprietary time series forecasting models 138 are implementable by the provider service 112. Notably, time series data 302 indicating previous transient throughput measurements of service endpoints 114 often exhibits multi-seasonality features, e.g., hourly, daily, and weekly seasonality patterns. Accordingly, seasonality time series forecasting models are implementable by the provider service 112 in one or more implementations. Examples of seasonality time series forecasting models include a Seasonal Autoregressive Integrated Moving Average (SARIMA) model, a SARIMAX model, a Multiple Seasonal Trend decomposition using Loess (MSTL) model, and a Trigonometric seasonality, Box-Cox transformation, Arma errors, Trend and Seasonal components (TBATs) model.

As shown, the throughput vector 308 is provided as input to a retry time selection module 314, which determines a total estimated throughput 316 for each of the plurality of future time units 312. As part of this, the retry time selection module 314 is configured to determine a predicted backlog 318 for each of the plurality of future time units 312. The predicted backlog 318 for a future time unit 312 is the number of requests 116 that are predicted to have been delayed up until the future time unit 312. Notably, the predicted backlog 318 for a future time unit 312 includes the requests 116 that have already been delayed and the requests 116 that are predicted to be delayed based on a comparison of the predicted throughput 310 values to the rate limiting threshold 134. Thus, the total estimated throughput 316 for a future time unit 312 is a summation of the predicted throughput 310 during the future time unit 312 (e.g., a first number of requests 116 that are predicted to be performed during the future time unit 312) and the predicted backlog 318, e.g., a second number of requests that are predicted have been delayed up until the future time unit 312.

The retry time selection module 314 is configured to identify a latest future time unit 312 for which the total estimated throughput 316 of the future time unit 312 is less than or equal to the throughput capacity 132 of the service endpoint 114a. To do so, the retry time selection module 314 iteratively compares the total estimated throughput 316 values determined for the future time units 312 to the throughput capacity 132 of the service endpoint 114a, e.g., as determined by the machine learning model 130 and/or the regression model 230. In doing so, the retry time selection module 314 first evaluates the latest future time unit 312 represented by the throughput vector 308, and iteratively evaluates progressively earlier future time units 312 until a future time unit 312 is identified having a total estimated throughput 316 that is less than or equal to the throughput capacity 132 of the service endpoint 114a.

The identified future time unit 312 is output as the future time unit 312a at which to retry sending the delayed requests 140. For example, the identified future time unit 312a is incorporated into the sending policy 136, effectively scheduling the delayed requests 140 for sending during the future time unit 312a. By doing so, the provider service 112 sends the delayed requests 140 during the future time unit 312a when the service endpoint 114a is expected to be experiencing a low enough transient throughput to handle both the requests 116 predicted to be sent at the future time unit 312a and the delayed requests 140.

### Example Procedures

The following discussion describes techniques that are configured to be implemented utilizing the previously described systems and devices. Aspects of each of the procedures are configured for implementation in hardware, firmware, software, or a combination thereof. The procedures are shown as a set of blocks that specify operations performed by one or more devices and are not necessarily limited to the orders shown for performing the operations by the respective blocks. In portions of the following discussion, reference is made to FIGS. 1-3.

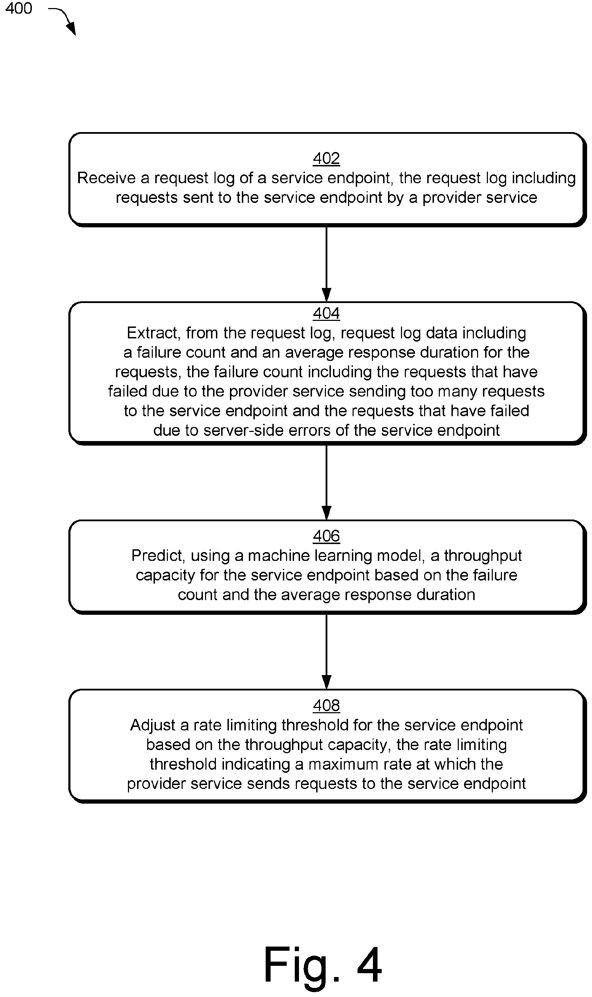

FIG. 4 depicts a procedure 400 in an example implementation of adaptive rate limiting for microservices. In the procedure 400, a request log of a service endpoint is received, the request log including requests sent to the service endpoint by a provider service (block 402). By way of example, the provider service 112 maintains a request log 120 for a service endpoint 114a including information regarding request/response exchanges between the provider service 112 and the service endpoint 114a. For instance, the request log 120 includes a plurality of request log entries 202, one for each request/response exchange, including a timestamp 204 of the exchange, a response code 206 (e.g., HTTP response status code) of the exchange, and a response duration 208 of the exchange.

Request log data is extracted from the request log including a failure count and an average response duration for the requests, the failure count including the requests that have failed due to the provider service sending too many requests to the service endpoint and the requests that have failed due to server-side errors of the service endpoint (block 404). For example, the data preprocessing system 210 extracts request log data 122 form the request log 120 including the failure count 124, the average response duration 126, and transient throughput 128 values for the service endpoint 114a. More specifically, the data summarization module 212 receives the request log entries 202, and aggregates the request log entries 202 into time unit summaries 214 for a plurality of time units 216 e.g., one second time frames.

A time unit summary 214 includes a failure count 124 indicating a number of requests 116 sent during a time unit 216 having a response code 206 indicating too many requests sent to the service endpoint 114a (e.g., HTTP response status code 429) or a response code 206 indicating server-side errors of the service endpoint 114a, e.g., HTTP response status code 5xx. In addition, a time unit summary 214 includes an average response duration 126 for requests 116 sent during the time unit 216 indicating an average duration of time between when a request 116 is sent by the provider service 112 and when a corresponding response 118 is received by the provider service 112. Furthermore, a time unit summary 214 includes a throughput 128 value indicating a number of requests sent per second during a time unit 216 (or the total number of requests sent during the time unit 216 in examples in which the time unit 216 is one second).

In one or more implementations, the time unit summaries 214 are provided to the data filtering module 218, which generates filtered summaries 220 by further aggregating the time unit summaries 214, and filtering, removing, and/or smoothing outliers and noisy data points in the time unit summaries 214. To do so, the data filtering module 218 aggregates the time unit summaries 218 into filtered summaries for a plurality of time intervals 222, which are a longer duration of time than the time units 216. Each filtered summary 220 includes the average throughput 224 of the time unit summaries 214 aggregated into the filtered summary 220, a filtered failure count 226 (e.g., a first quartile of the failure counts 124 of the time unit summaries 214 aggregated into the filtered summary 220), and a filtered response duration 228 (e.g., a first quartile of the average response durations 126 of the time unit summaries 214 aggregated into the filtered summary).

A throughput capacity for the service endpoint is predicted using a machine learning model based on the failure count and the average response duration (block 406). By way of example, the filtered failure count 226 and the filtered response duration 228 are fit into the regression model 230 as predictor variables over the plurality of time intervals 222. In addition, the average throughput 224 is fit into the regression model as a response variable over the plurality of time intervals 222. As a result, the regression model 230 learns to predict transient throughput of the service endpoint 114 from input data including a failure count 124 and an average response duration 126. Given this, the provider service 112 uses the regression model 230 to predict a value of transient throughput that maps to a failure count 124 that is below a first threshold, and an average response duration 126 that is below a second threshold. The predicted value of the transient throughput is the learned throughput capacity 132 for the service endpoint 114a.

A rate limiting threshold is adjusted for the service endpoint based on the throughput capacity, the rate limiting threshold indicating a maximum rate at which the provider service sends requests to the service endpoint (block 408). After determining the learned throughput capacity 132 for the service endpoint 114a, for example, the provider service 112 adjusts the rate limiting threshold 134 for the service endpoint 114a to be equal to the learned throughput capacity 132. The rate limiting threshold 134 is a maximum rate at which the provider service 112 sends requests 116 to the service endpoint 114a.

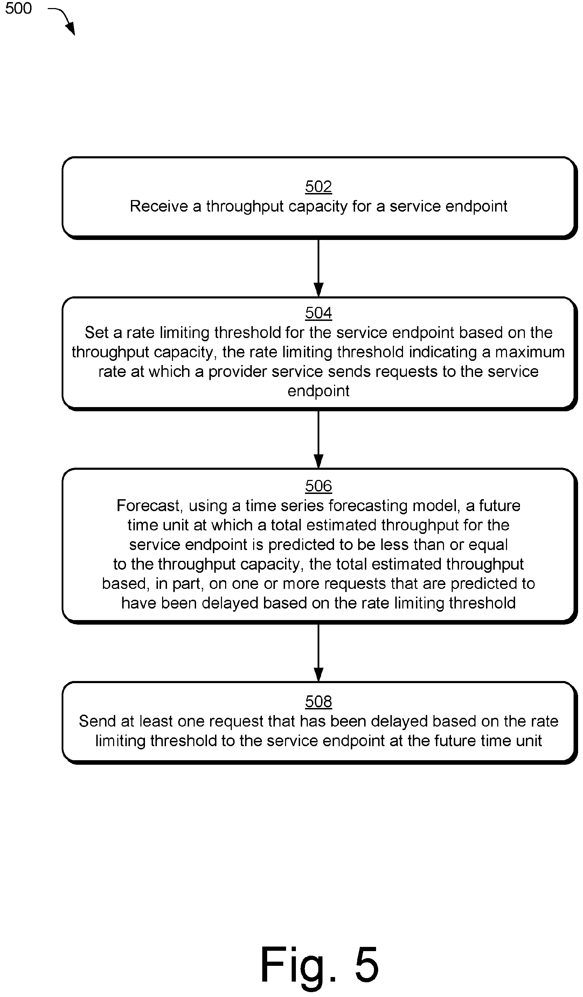

FIG. 5 depicts a procedure 500 in an example implementation of predictive retry for microservices. In the procedure 500, a throughput capacity for a service endpoint is received (block 502). By way of example, the provider service 112 receives an indication of a throughput capacity 132 for the service endpoint 114a. In one or more examples, the provider service 112 employs a machine learning model 130 to learn the throughput capacity 132 for the service endpoint 114a, e.g., by performing blocks 402, 404, and 406 of FIG. 4.

A rate limiting threshold is set for the service endpoint based on the throughput capacity, the rate limiting threshold indicating a maximum rate at which a provider service sends requests to the service endpoint (block 504). For instance, the provider service 112 sets the rate limiting threshold 134 for the service endpoint 114a to be equal to the received throughput capacity 132, and the rate limiting threshold indicates a maximum rate at which the provider service 112 sends requests 116 to the service endpoint 114a.

A future time unit at which a total estimated throughput for the service endpoint is predicted to be less than or equal to the throughput capacity is forecasted using a time series forecasting model, the total estimated throughput based, in part, on one or more requests that have been delayed based on the rate limiting threshold (block 506). For example, time series data 302 indicating measured throughput 304 values for the service endpoint 114a over a plurality of previous time units 306 are extracted from the request log 120 and provided to a time series forecasting model 138. Based on the time series data 302, the time series forecasting model 138 generates a throughput vector 308 indicating predicted throughputs 310 for the service endpoint 114a over a plurality of future time units 312.

Using the throughput vector 308, the retry time selection module 314 determines total estimated throughput 316 values for each of the future time units 312, such that the total estimated throughput for a future time unit 312 includes the requests 116 that are predicted to be performed during the future time unit 312 (e.g., the predicted throughput 310) and the requests 116 that are predicted to have been delayed up until the future time unit 312 (e.g., the predicted backlog 318). Next, the retry time selection module 314 identifies a particular future time unit 312a for which the total estimated throughput 316 value is less than or equal to the throughput capacity 132.

At least one request that has been delayed based on the rate limiting threshold is sent to the service endpoint at the future time unit (block 508). By way of example, the provider service 112 sends the delayed requests 140 that have been delayed based on the rate limiting threshold 134 to the service endpoint 114a at the identified future time unit 312a.

### Example System and Device

FIG. 6 illustrates an example system 600 that includes an example computing device 602 that is representative of one or more computing systems and/or devices that implement the various techniques described herein. This is illustrated through inclusion of the provider service 112. The computing device 602 is configurable, for example, as a server of a service provider (e.g., the service provider system 102), a device associated with a client (e.g., a client device 104), an on-chip system, and/or any other suitable computing device or computing system.

The example computing device 602 as illustrated includes a processing device 604, one or more computer-readable media 606, and one or more input/output (I/O) interfaces 608 that are communicatively coupled, one to another. Although not shown, the computing device 602 further includes a system bus or other data and command transfer system that couples the various components, one to another. A system bus can include any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing device 604 is representative of functionality to perform one or more operations using hardware. Accordingly, the processing device 604 is illustrated as including hardware element 610 that is configurable as processors, functional blocks, and so forth. This includes implementation in hardware as an application specific integrated circuit or other logic device formed using one or more semiconductors. The hardware elements 610 are not limited by the materials from which they are formed or the processing mechanisms employed therein. For example, processors are configurable as semiconductor(s) and/or transistors (e.g., electronic integrated circuits (ICs)). In such a context, processor-executable instructions are electronically executable instructions.

The computer-readable storage media 606 is illustrated as including memory/storage 612 that stores instructions that are executable to cause the processing device 604 to perform operations. The memory/storage 612 represents memory/storage capacity associated with one or more computer-readable media. The memory/storage 612 includes volatile media (such as random access memory (RAM)) and/or nonvolatile media (such as read only memory (ROM), Flash memory, optical disks, magnetic disks, and so forth). The memory/storage 612 includes fixed media (e.g., RAM, ROM, a fixed hard drive, and so on) as well as removable media (e.g., Flash memory, a removable hard drive, an optical disc, and so forth). The computer-readable media 606 is configurable in a variety of other ways as further described below.

Input/output interface(s) 608 are representative of functionality to allow a user to enter commands and information to computing device 602, and also allow information to be presented to the user and/or other components or devices using various input/output devices. Examples of input devices include a keyboard, a cursor control device (e.g., a mouse), a microphone, a scanner, touch functionality (e.g., capacitive or other sensors that are configured to detect physical touch), a camera (e.g., employing visible or non-visible wavelengths such as infrared frequencies to recognize movement as gestures that do not involve touch), and so forth. Examples of output devices include a display device (e.g., a monitor or projector), speakers, a printer, a network card, tactile-response device, and so forth. Thus, the computing device 602 is configurable in a variety of ways as further described below to support user interaction.

Various techniques are described herein in the general context of software, hardware elements, or program modules. Generally, such modules include routines, programs, objects, elements, components, data structures, and so forth that perform particular tasks or implement particular abstract data types. The terms "module," "functionality," "component," and "system" as used herein generally represent software, firmware, hardware, or a combination thereof. The features of the techniques described herein are platform-independent, meaning that the techniques are configurable on a variety of commercial computing platforms having a variety of processors.

An implementation of the described modules and techniques is stored on or transmitted across some form of computer-readable media. The computer-readable media includes a variety of media that is accessed by the computing device 602. By way of example, and not limitation, computer-readable media includes "computer-readable storage media" and "computer-readable signal media."

"Computer-readable storage media" refers to media and/or devices that enable persistent and/or non-transitory storage of information (e.g., instructions are stored thereon that are executable by a processing device) in contrast to mere signal transmission, carrier waves, or signals per se. Thus, computer-readable storage media refers to non-signal bearing media. The computer-readable storage media includes hardware such as volatile and non-volatile, removable and non-removable media and/or storage devices implemented in a method or technology suitable for storage of information such as computer readable instructions, data structures, program modules, logic elements/circuits, or other data. Examples of computer-readable storage media include but are not limited to RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information and are accessible by a computer.

"Computer-readable signal media" refers to a signal-bearing medium that is configured to transmit instructions to the hardware of the computing device 602, such as via a network. Signal media typically embodies computer readable instructions, data structures, program modules, or other data in a modulated data signal, such as carrier waves, data signals, or other transport mechanism. Signal media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media.

As previously described, hardware elements 610 and computer-readable media 606 are representative of modules, programmable device logic and/or fixed device logic implemented in a hardware form that are employed in some embodiments to implement at least some aspects of the techniques described herein, such as to perform one or more instructions. Hardware includes components of an integrated circuit or on-chip system, an application-specific integrated circuit (ASIC), a field-programmable gate array (FPGA), a complex programmable logic device (CPLD), and other implementations in silicon or other hardware. In this context, hardware operates as a processing device that performs program tasks defined by instructions and/or logic embodied by the hardware as well as a hardware utilized to store instructions for execution, e.g., the computer-readable storage media described previously.

Combinations of the foregoing are also be employed to implement various techniques described herein. Accordingly, software, hardware, or executable modules are implemented as one or more instructions and/or logic embodied on some form of computer-readable storage media and/or by one or more hardware elements 610. The computing device 602 is configured to implement particular instructions and/or functions corresponding to the software and/or hardware modules. Accordingly, implementation of a module that is executable by the computing device 602 as software is achieved at least partially in hardware, e.g., through use of computer-readable storage media and/or hardware elements 610 of the processing device 604. The instructions and/or functions are executable/operable by one or more articles of manufacture (for example, one or more computing devices 602 and/or processing devices 604) to implement techniques, modules, and examples described herein.

The techniques described herein are supported by various configurations of the computing device 602 and are not limited to the specific examples of the techniques described herein. This functionality is also implementable all or in part through use of a distributed system, such as over a "cloud" 614 via a platform 616 as described below.

The cloud 614 includes and/or is representative of a platform 616 for resources 618. The platform 616 abstracts underlying functionality of hardware (e.g., servers) and software resources of the cloud 614. The resources 618 include applications and/or data that can be utilized while computer processing is executed on servers that are remote from the computing device 602. Resources 618 can also include services provided over the Internet and/or through a subscriber network, such as a cellular or Wi-Fi network.

The platform 616 abstracts resources and functions to connect the computing device 602 with other computing devices. The platform 616 also serves to abstract scaling of resources to provide a corresponding level of scale to encountered demand for the resources 618 that are implemented via the platform 616. Accordingly, in an interconnected device embodiment, implementation of functionality described herein is distributable throughout the system 600. For example, the functionality is implementable in part on the computing device 602 as well as via the platform 616 that abstracts the functionality of the cloud 614.

Although the invention has been described in language specific to structural features and/or methodological acts, it is to be understood that the invention defined in the appended claims is not necessarily limited to the specific features or acts described. Rather, the specific features and acts are disclosed as example forms of implementing the claimed invention.

## Claims

1. A method, comprising:
receiving a request log of a service endpoint, the request log including requests sent to the service endpoint by a provider service;
extracting, from the request log, request log data including a failure count and an average response duration for the requests, the failure count including the requests that have failed due to the provider service sending too many requests to the service endpoint and the requests that have failed due to server-side errors of the service endpoint;
predicting, using a machine learning model, a throughput capacity for the service endpoint based on the failure count and the average response duration; and
adjusting a rate limiting threshold for the service endpoint based on the throughput capacity, the rate limiting threshold defining a rate at which the provider service sends requests to the service endpoint.

2. The method of claim 1, wherein extracting the request log data includes aggregating the request log data into a plurality of summaries for a plurality of time units, each summary including the failure count for a respective time unit, the average response duration for the respective time unit, and a throughput value exhibited by the service endpoint during the respective time unit.

3. The method of claim 2, wherein extracting the request log data includes aggregating the plurality of summaries into a plurality of filtered summaries for a plurality of time intervals, a time interval being selected based on the throughput values of the plurality of summaries and being a longer duration of time than a time unit of the plurality of time units.

4. The method of claim 3, wherein each respective filtered summary includes a first quartile of the failure count of a set of summaries aggregated into the respective filtered summary, a first quartile of the average response duration of the set of summaries, and an average throughput value of the set of summaries.

5. The method of claim 4, wherein the machine learning model is a regression model trained to predict transient throughput of the service endpoint based on the failure count and the average response duration by fitting the first quartile of the failure count and the first quartile of the average response duration to the regression model as predictor variables over the plurality of time intervals, and fitting the average throughput value to the regression model as a response variable over the plurality of time intervals;
wherein predicting the throughput capacity may include determining, using the regression model, a value of the transient throughput for the service endpoint that maps to the failure count below a first threshold and the average response duration below a second threshold, wherein the throughput capacity may be the value of the transient throughput.

6. The method of any one of the preceding claims, further comprising:
continually updating the request log to include new requests sent to the service endpoint by the provider service, the method further comprising iteratively performing the extracting the request log data from the continually updated request log, the predicting the throughput capacity, and the adjusting the rate limiting threshold, thereby continually adjusting the rate limiting threshold applied to the service endpoint; and/or
receiving an additional request log including additional requests sent to a different service endpoint by the provider service, and performing the extracting the request log data from the additional request log, the predicting the throughput capacity for the different service endpoint, and the adjusting the rate limiting threshold for the different service endpoint, resulting in different rate limiting thresholds applied to different service endpoints.

7. The method of any one of the preceding claims, further comprising:
forecasting, using a time series forecasting model, a future time unit at which a total estimated throughput for the service endpoint is predicted to be less than or equal to the throughput capacity, the total estimated throughput based, in part, on one or more requests that are predicted to have been delayed based on the rate limiting threshold; and
sending at least one request that has been delayed based on the rate limiting threshold to the service endpoint at the future time unit.

8. The method of claim 7,
wherein forecasting the future time unit includes:
receiving, by the time series forecasting model, time series data including throughput measurements for the service endpoint over a plurality of previous time units; and
generating, by the time series forecasting model, a throughput vector based on the time series data, the throughput vector indicating predicted throughputs for the service endpoint during a plurality of future time units;
wherein forecasting the future time unit may further include:
determining the total estimated throughput for the service endpoint during the plurality of future time units based on the throughput vector, the total estimated throughput of a respective future time unit including a first number of requests that are predicted to have been delayed up until the respective future time unit and a second number of requests that are predicted to be performed during the respective future time unit; and
forecasting, as the future time unit at which to send the at least one request, a latest time unit represented by the throughput vector for which the total estimated throughput is less than or equal to the throughput capacity.

9. A system, comprising:
at least one processor; and
a memory storing instructions, which when executed by the at least one processor, cause the at least one processor to perform operations including:
receiving a throughput capacity for a service endpoint;
setting a rate limiting threshold for the service endpoint based on the throughput capacity, the rate limiting threshold defining a rate at which a provider service sends requests to the service endpoint;
forecasting, using a time series forecasting model, a future time unit at which a total estimated throughput for the service endpoint is predicted to be less than or equal to the throughput capacity, the total estimated throughput based, in part, on one or more requests that are predicted to have been delayed based on the rate limiting threshold; and
sending at least one request that has been delayed based on the rate limiting threshold to the service endpoint at the future time unit.

10. The system of claim 9, wherein receiving the throughput capacity for the service endpoint includes:
receiving a request log of the service endpoint, the request log including the requests sent to the service endpoint by the provider service;
extracting, from the request log, request log data including a failure count and an average response duration for the requests; and
predicting, using a machine learning model, the throughput capacity for the service endpoint based on the failure count and the average response duration.

11. The system of claim 9 or 10,
wherein forecasting the future time unit includes:
receiving, by the time series forecasting model, time series data including throughput measurements for the service endpoint over a plurality of previous time units; and
generating, by the time series forecasting model, a throughput vector based on the time series data, the throughput vector indicating predicted throughputs for the service endpoint during a plurality of future time units;
wherein forecasting the future time unit may further include:
determining the total estimated throughput for the service endpoint during the plurality of future time units based on the throughput vector, the total estimated throughput of a respective future time unit including a first number of requests that are predicted to have been delayed up until the respective future time unit and a second number of requests that are predicted to be performed during the respective future time unit; and
forecasting, as the future time unit at which to send the at least one request, a latest time unit represented by the throughput vector for which the total estimated throughput is less than or equal to the throughput capacity.

12. One or more transitory or non-transitory computer-readable storage media storing instructions that, responsive to execution by at least one processing device, cause the at least one processing device to perform operations including:
predicting, using a machine learning model, a throughput capacity for a service endpoint based on at least one signal indicative of throughput overcapacity of the service endpoint, the at least one signal extracted from a request log of the service endpoint;
controlling operation of a service endpoint by adjusting a rate limiting threshold based on the throughput capacity, the rate limiting threshold defining a rate at which a provider service sends requests to the service endpoint; and
rescheduling one or more requests for a future time unit, as determined by a time series forecasting model, at which a total estimated throughput for the service endpoint is predicted to be less than or equal to the throughput capacity, the one or more requests having been delayed based on the rate limiting threshold.

13. The one or more transitory or non-transitory computer-readable storage media of claim 12, wherein the at least one signal includes a failure count and an average response duration for requests of the request log, the failure count including the requests that have failed due to the provider service sending too many requests to the service endpoint and the requests that have failed due to server-side errors of the service endpoint.

14. The one or more transitory or non-transitory computer-readable storage media of claim 12 or 13, wherein the machine learning model is a regression model trained to predict transient throughput for the service endpoint by fitting the at least one signal to the regression model, wherein the at least one signal is a predictor variable of the regression model and the transient throughput is a response variable of the regression model;
wherein predicting the throughput capacity may include determining, using the regression model, a value of the transient throughput for the service endpoint that maps to the at least one signal below a threshold, wherein the throughput capacity may be the value of the transient throughput.

15. The one or more transitory or non-transitory computer-readable storage media of any one of claims 12 to 14, wherein rescheduling the one or more requests includes determining, using the time series forecasting model, the total estimated throughput by combining a first number of requests that are predicted to have been delayed up until the future time unit based on the rate limiting threshold and a second number of requests that are predicted to be performed during the future time unit.
